Europäisches Patentamt

European Patent Office

Office européen des brevets

(11) Veröffentlichungsnummer: **0 262 471 B1**

# EUROPÄISCHE PATENTSCHRIFT

(45) Veröffentlichungstag der Patentschrift: **14.08.91**

(51) Int. Cl.⁵: **B62D 5/093**, B62D 5/32

(21) Anmeldenummer: **87113081.1**

(22) Anmeldetag: **08.09.87**

(54) **Hydrauliksystem mit zwei doppelseitig beaufschlagbaren Verbrauchern, einer Dosierpumpe und einer an einen Sammelbehälter angeschlossenen Pumpe.**

(30) Priorität: **29.09.86 US 912720**

(43) Veröffentlichungstag der Anmeldung:
**06.04.88 Patentblatt 88/14**

(45) Bekanntmachung des Hinweises auf die
Patenterteilung:
**14.08.91 Patentblatt 91/33**

(84) Benannte Vertragsstaaten:
**DE FR GB IT**

(56) Entgegenhaltungen:
**DE-A- 3 212 217**
**DE-B- 2 035 460**
**US-A- 3 765 181**
**US-A- 4 470 260**

(73) Patentinhaber: **DEERE & COMPANY**
**1 John Deere Road**
**Moline, Illinois 61265(US)**

(72) Erfinder: **Burk, Ronnie Franklin**
**4562 Hoff Road**
**Waterloo Iowa 50701(US)**

(74) Vertreter: **Feldmann, Bernhard**
**DEERE & COMPANY European Office, Patent**
**Department Steubenstrasse 36-42 Postfach**
**503**
**W-6800 Mannheim 1(DE)**

## Beschreibung

Die Erfindung bezieht sich auf ein Hydrauliksystem mit zwei doppelseitig beaufschlagbaren Verbrauchern, einer in ihrer Förderrichtung umkehrbaren Dosierpumpe, einer an einen Sammelbehälter angeschlossenen Pumpe, einem Dosierventil und einem pilotgesteuerten Ventil, wobei die Pumpe über einen Kanal an das aus seiner Neutralstellung in zwei Arbeitsstellungen verschiebbare Dosierventil angeschlossen ist, in der einen Arbeitsstellung des Dosierventils die erste Seite der Dosierpumpe mit der Pumpe und die zweite Seite der Dosierpumpe mit der ersten Seite des ersten Verbrauchers und die zweite Seite dieses Verbrauchers mit dem Sammelbehälter verbunden ist, in der anderen Arbeitsstellung des Dosierventils die zweite Seite der Dosierpumpe mit der Pumpe und die erste Seite der Dosierpumpe mit der zweiten Seite des ersten Verbrauchers und die erste Seite dieses Verbrauchers mit dem Sammelbehälter verbunden ist, die Pumpe über einen Hauptkanal an das aus seiner Neutralstellung in zwei Arbeitsstellungen verschiebbare pilotgesteuerte Ventil angeschlossen ist, in der ersten Arbeitsstellung des pilotgesteuerten Ventils die Pumpe mit der ersten Seite des zweiten Verbrauchers verbunden ist und in der zweiten Arbeitsstellung des pilotgesteuerten Ventils die erste Seite des zweiten Verbrauchers mit dem Sammelbehälter verbunden ist.

Derartige Hydrauliksysteme finden vorzugsweise bei Lenkungen Verwendung, und bei dem bekannten Hydrauliksystem für eine Lenkung (US-A-3 765 181) ist die zweite Seite des zweiten Verbrauchers in der ersten Arbeitsstellung des pilotgesteuerten Ventils mit dem Sammelbehälter und in der zweiten Arbeitsstellung des pilotgesteuerten Ventils mit der Pumpe in Verbindung. Hierdurch ist ein Hydrauliksystem geschaffen, bei dem normalerweise nur der erste Verbraucher druckbeaufschlagt wird und der zweite nur dann, wenn ein vorherbestimmter Steuerwiderstand auftritt. Nur in einem solchen Falle wird der zweite mit dem ersten Verbraucher mechanisch verbundene Verbraucher dazu genutzt, zusätzliche Lenkkraft aufzubringen.

Die mit der Erfindung zu lösende Aufgabe wird darin gesehen, beide Verbraucher über das pilotgesteuerte Ventil an die Pumpe anschließen zu können. Diese Aufgabe ist nach der Erfindung dadurch gelöst worden, daß die zweite Seite des ersten Verbrauchers in der ersten Arbeitsstellung des pilotgesteuerten Ventils mit dem Sammelbehälter und in der zweiten Arbeitsstellung des pilotgesteuerten Ventils mit der Pumpe verbunden ist, wobei in der einen Arbeitsstellung des Dosierventils die zweite Seite der Dosierpumpe mit der ersten Seite des zweiten Verbrauchers und in der anderen Arbeitsstellung des Dosierventils die erste Seite der Dosierpumpe mit der zweiten Seite des zweiten Verbrauchers verbunden ist.

Auf diese Weise wird, wie bei Lenkungen üblich, bei Betätigung des Lenkrades das Dosierventil aus seiner Neutralstellung in eine seiner Arbeitsstellungen verstellt, wodurch die Pumpe mit die Dosierpumpe verbunden wird und in den Verbindungsleitungen zu den Verbrauchern ein Druck aufgebaut werden kann. Dieser Druck verstellt das pilotgesteuerte Ventil ebenfalls in seine zugehörige Arbeitsstellung, wodurch einer der Verbraucher zusätzlich noch mit der Pumpe verbunden wird, damit an einem der Verbraucher eine größere Kraft anliegt, der dazu neigt, den zweiten Verbraucher nachzuziehen, wodurch das Lenkrad sehr leichtgängig ist, was insbesondere bei langsamen Fahrten wünschenswert sein kann.

Andererseits ist es wünschenswert bei schnelleren Fahrten, daß das Lenkrad schwergängiger wird oder für den gleichen Einschlag größere Lenkbewegungen erforderlich sind. Hierzu wird nach der Erfindung vorgeschlagen, daß der Hauptkanal drosselbar ist, so daß die zusätzliche auf den einen Verbraucher einwirkende Kraft mehr und mehr abgebaut werden kann, was letztlich bedeutet, daß der Widerstand am Lenkrad zunimmt, und letztlich dazu führt, je nachdem wie die Drosselung ist, daß für einen gleichen Lenkeinschlag größere Drehbewegungen am Lenkrad vorgenommen werden müssen. Die Drosselung erfolgt zweckmäßigerweise in Abhängigkeit von einem Parameter, weshalb ferner vorgeschlagen wird, daß der Hauptkanal in Abhängigkeit von einem von einer Bedienungsperson steuerbaren Signal drosselbar ist, beispielsweise in Abhängigkeit der Fahrgeschwindigkeit, der Motordrehzahl, der Radstellung usw.

Eine Drosselung kann in einfacher Weise dann erfolgen, wenn im Hauptkanal ein von einer offenen in eine geschlossene Stellung verbringbares Kompensatorventil vorgesehen ist, wobei, wenn sich das Kompensatorventil allmählich von seiner offenen in seine geschlossene Stellung verstellt, der Widerstand am Lenkrad zunimmt bzw. eine größere Flüssigkeitsmenge an den Verbrauchern erforderlich wird, um einen gleichen Lenkeinschlag zu erbringen, was darin resultiert, daß das Lenkrad in einem größeren Winkel gedreht werden muß.

Nach der Erfindung ist ferner vorgesehen, daß die Pumpe in den Neutralstellungen des Dosierventils und des pilotgesteuerten Ventils über eine in das pilotgesteuerte Ventil mündende Drosselleitung mit dem Sammelbehälter verbunden ist. Dadurch wird der größere Druck immer an dem Dosierventil anstehen und bei Verstellung des Dosierventils ausreichen, das pilotgesteuerte Ventil zu verstellen, derart, daß die Verbindung mit dem Sammelbehälter unterbrochen ist. Bei einigen Ausführungen kann es zweckmäßig sein, daß auch bei geschlossenem Kompensatorventil eine zusätzliche Verbindung zu mindestens einem Verbraucher von der Pumpe aus besteht, weshalb ferner nach der Erfindung vorgeschlagen wird, daß die Drosselleitung in der ersten Arbeitsstellung des pilotgesteuerten Ventils mit der ersten Seite des zweiten Verbrauchers und in der zweiten Arbeitsstellung des pilotgesteuerten Ventils mit der zweiten Seite des ersten Verbrauchers in Verbindung steht.

Ferner kann stromabwärts des Kompensatorventils und der Drosselleitung je ein Pilotkanal abzweigen, die an dem Kompensatorventil anliegen, wobei das Kompensatorventil über ein Solenoidventil aus seiner offenen Stellung in seine geschlossene Stellung verstellbar ist, und wenn dann beispielsweise in Abhängigkeit von der Fahrgeschwindigkeit die Spule des Solenoidventils erregt wird, kann es das Kompensatorventil entsprechend verstellen. Dies erfolgt in einfacher Weise dann, wenn die Pumpe über einen das Solenoidventil aufweisenden Drosselkanal mit dem Sammelbehälter verbunden ist, wobei vom Drosselkanal stromaufwärts des Solenoidventils ein an das Kompensatorventil angeschlossener Pilotkanal abzweigt und der Drosselkanal über das Solenoidventil unterbrochen werden kann. In einem solchen Falle baut sich dann an der einen Seite des Kompensatorventils ein Druck auf, der je nach der Stellung des Solenoidventils das Kompensatorventil allmählich aus seiner offenen in seine geschlossene Stellung verstellt.

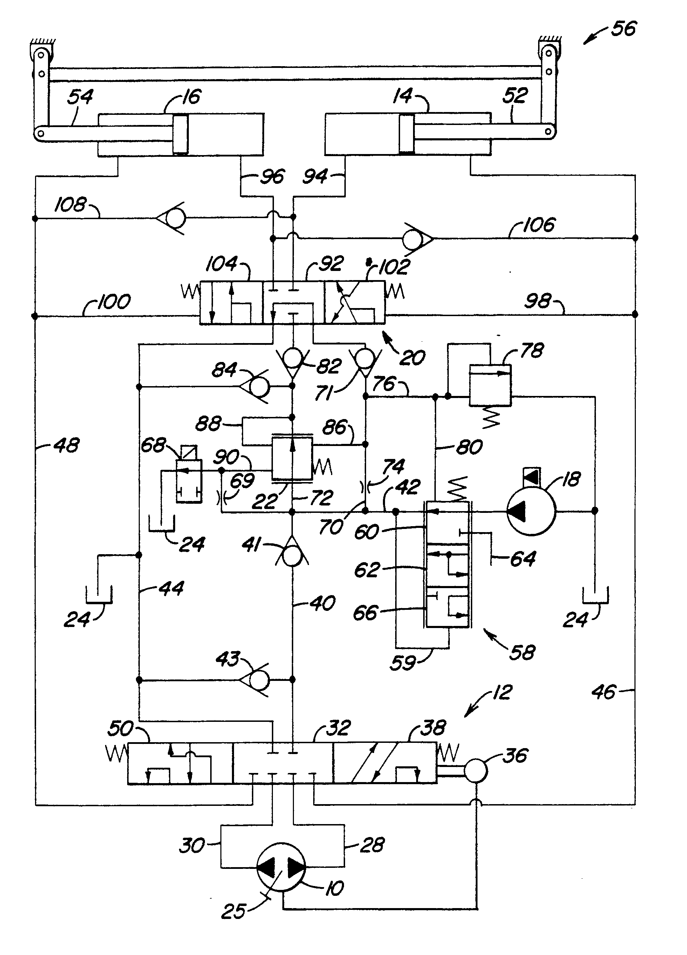

In der Zeichnung ist ein nachfolgend näher erläutertes Ausführungsbeispiel der Erfindung dargestellt. Das Hydrauliksystem dient für eine hydrostatische Lenkung in einem Fahrzeug und besteht aus zwei parallelen Hydraulikkreisen, die schematisch in der einzigen Figur dargestellt sind.

Ein Schaltkreis ist ein Steuerkreis mit Primärkomponenten, einer manuell betätigbaren Dosierpumpe 10 in Form einer Rotorpumpe, einem Dosierventil 12 und den kolbenseitigen Enden von zwei Verbrauchern 14 und 16 in Form von doppelseitig beaufschlagbaren Zylindern. Der andere Schaltkreis besteht aus einem Kraftschaltkreis mit primären Komponenten, wie einer Pumpe 18, einem Ventil 20 und den kolbenseitigen Enden der Verbraucher 14 und 16, und aus einem Kompensatorventil 22. Beide Schaltkreise haben einen gemeinsamen Sammelbehälter 24 und wirken, wie nachfolgend erläutert wird, zusammen. Die Dosierpumpe 10 oder die Rotorpumpe ist eine die gesamte Durchflußmenge dosierende Pumpe, die an ein Lenkrad 25 angeschlossen ist. Die Dosierpumpe 10 ist so ausgelegt, daß sie der Kraft, die eine Bedienungsperson aufbringen kann, oder den Steuerrückdruckerfordernissen angepaßt ist. Die Dosierpumpe 10 liefert Flüssigkeit in eine Richtung, die von der Bedienungsperson in Abhängigkeit von der Drehung des Lenkrades 25 über das Dosierventil 12 und Kanäle 28 und 30 bestimmt wird. Über die Betätigung des Lenkrades 25 wird ebenfalls die Position des Dosierventils 12 in herkömmlicher Weise bestimmt, und zwar über eine Betätigungseinrichtung 36, die dann in Abhängigkeit von der Drehrichtung des Lenkrades 25 oder von der Richtung des Flüssigkeitsflusses durch die Dosierpumpe 10 betätigt wird.

Das Dosierventil ist ein Sechs-Wege-Drei-Stellungsventil, und ein Kanal 40 liefert unter Druck stehende Flüssigkeit von der Pumpe 18 zu dem Dosierventil 12 über einen Zwischenkanal 42. Ein weiterer Kanal 44 verbindet das Dosierventil 12 mit dem Sammelbehälter 24. Ein Rückschlagventil in einem Kanal 43 erlaubt einen Flüssigkeitsfluß von dem Kanal 44 zu dem Kanal 40. Ein weiteres Rückschlagventil 41, das in dem Kanal 40 zwischen den Kanälen 42 und 43 vorgesehen ist, verhindert den Flüssigkeitsfluß zu der Pumpe 18 in Richtung des Kanals 42. Das Dosierventil 12 hat einen schematisch dargestellten Spulenabschnitt, der über Federn in seiner Mittenstellung 32 oder Neutralstellung gehalten wird, in der ein Flüssigkeitsdurchfluß über das Ventil unterbunden ist. In Abhängigkeit von der Drehung am Lenkrad in einer Richtung, in der der Kanal 28 druckbeaufschlagt wird, wird die Betätigungseinrichtung 36 die Ventilspule nach links in eine Arbeitsstellung 38 verstellen. In der linken Arbeitsstellung 38 wird unter Druck stehende Flüssigkeit von dem Kanal 40 in den Kanal 30 gelangen, wobei ein regulierter Flüssigkeitsfluß von dem Kanal 28 zu der Kolbenstangen seite des Verbrauchers 14 über einen Dosierkanal 46 gelangt. In der Arbeitsstellung 38 ist das kolbenstangenseitige Ende des Verbrauchers 16 mit dem Kanal 44 durch einen weiteren Dosierkanal 48 verbunden. Eine Drehung des Lenkrades 25 in die entgegengesetzte Richtung verschiebt die Spule des Dosierventils 12 nach rechts in eine rechte Arbeitsstellung 50, in der unter Druck stehende Flüssigkeit aus dem Kanal 40 in den Kanal 28 gelangt, so daß ein regulierter Flüssigkeitsfluß von der Dosierpumpe 10 und dem Kanal 30 in den Dosierkanal 48 und letztlich zu dem Verbraucher 16 gelangt, wobei der Dosierkanal 46 mit dem Sammelbehälter über den Kanal 44 in Verbindung steht. Flüssigkeitsdruck aus den Dosierkanälen 46 und 48 bewirkt, daß die Kolbenstangen 52 oder 54 in den entsprechenden Verbraucher eingefahren werden. Ein mechanisches Lenkgestänge 56 kuppelt die Bewegung der Kolbenstangen 52 und 54, so daß das Einfahren der einen Kolbenstange das Ausfahren der anderen Kolbenstange bewirkt.

Die kolbenseitigen Enden der Verbraucher 14 und 16 sprechen normalerweise auf den Flüssigkeitsdruck von der Pumpe 18 an, die eine in einer Richtung antreibbare, druckkompensierte Pumpe ist, die von dem Motor des Fahrzeuges aus angetrieben wird. Die Pumpe 18 saugt Flüssigkeit aus dem Sammelbehälter 24 und fördert unter Druck stehende Flüssigkeit in den Kanal 42 über ein Prioritätsventil 58.

Das Prioritätsventil 58 ist ein stufenlos regelbares Drei-Wege-Ventil mit einem Schieber, der in drei schematisch dargestellte Stellungen verstellbar ist. Eine Feder drückt das Prioritätsventil 58 in eine erste Offenstellung 60, in der eine uneingeschränkte Flüssigkeitsverbindung über den Kanal 42 besteht. Ein Pilotkanal 59 verbindet den Flüssigkeitsdruck aus dem Kanal 42 derart mit der einen Seite des Prioritätsventils, daß es progressiv in die Position 62 verschoben wird, in der der Pumpenauslaßdruck zwischen dem Kanal 42 und einer Sekundärfunktion bzw. deren Kanal 64 aufgeteilt wird, und weiter in eine Stellung 66, in der der gesamte Pumpenauslaß in den Kanal 64 gelangt. Der Kanal 64 geht zu verschiedenen Sekundärfunktionen, die in der Zeichnung nicht dargestellt sind, um diese zu beaufschlagen.

Der Flüssigkeitsdruck im Kanal 42 steht, wie vorstehend bereits beschrieben worden ist, an dem Dosierventil 12 an und ferner über eine Drossel 69 an einem Solenoidventil 68, das verschiedene Positionen einnehmen kann, sowie an einem pilotgesteuerten Ventil über einen Hauptkanal 72. Der Kanal 44 ist mit dem Hauptkanal 72 über einen weiteren Kanal verbunden, in dem ein Rückschlagventil 84 derart vorgesehen ist, daß eine Druckflüssigkeitsverbindung von dem Kanal 44 zu dem Hauptkanal 72 besteht. Das Kompensatorventil 22 und ein weiteres Rückschlagventil 82 sind in dem Hauptkanal zwischen dem Kanal 42 und dem pilotgesteuerten Ventil 20 vorgesehen.

An den Kanal 42 ist ferner eine Drosselleitung 70 mit einer Drossel 74 angeschlossen, die in der Nähe der Abzweigung der Drosselleitung 70 vom Kanal 42 vorgesehen ist und den Flüssigkeitsfluß drosselt. Das andere Ende der Drosselleitung 70 mündet in das pilotgesteuerte Ventil und ist mit einem Rückschlagventil 71 nahe dem pilotgesteuerten Ventil 20 derart versehen, daß ein Rückfluß aus dem pilotgesteuerten Ventil 20 in die Drosselleitung verhindert wird. Ein weiterer Kanal 76 zweigt von der Drosselleitung 70 zwischen dem Rückschlagventil 71 und der Drossel 74 ab und steht mit einem Überdruckventil 78 in Verbindung, über das nicht benötigte Flüssigkeit in den Sammelbehälter gelangen kann. Das Überdruckventil 78 überwacht den Druck in dem Kanal 76, um hauptsächlich einen Überdruck dieses die Last messenden Schaltkreises zu verhindern. Flüssigkeitsdruck in dem Kanal 76 gelangt außerdem zu dem Prioritätsventil 58 über einen Kanal 80 und bewirkt, daß sich der Schieber des Prioritätsventils in eine Stellung verstellen kann, in der der Flüssigkeitsdruck in dem Kanal 42 vergrößert wird.

Das schematisch dargestellte Kompensatorventil 22 ist mit einer endlosen Reihe von Arbeitsstellungen zwischen einer vollkommen offenen und einer vollkommen geschlossenen Position versehen. Eine Feder drückt das Kompensatorventil in seine offene Stellung, und ein Pilotkanal 86 verbindet die Drosselleitung 70 zwischen der Drossel 74 und dem pilotgesteuerten Ventil 20 mit dem Kompensatorventil 22, wodurch an dieser Seite des Kompensatorventils ein Druck anliegt, der das Kompensatorventil 22 in seine offene Position drükken will. Zwei Pilotkanäle 88 und 90 verbinden den Flüssigkeitsdruck mit dem Kompensatorventil 22 derart, daß das Kompensatorventil 22 in eine geschlossene Position gedrückt wird. Der Pilotkanal 88 nimmt den Druck in dem Hauptkanal 72 zwischen dem pilotgesteuerten Ventil 20 und dem Rückschlagventil 82 wahr und bewirkt zusammen mit dem Pilotkanal 90 eine Einlaßkompensation für das Ventil 22, das einen konstanten Druckabfall bewirkt. Das Solenoidventil 68 kann in dem Pilotkanal 90 einen Druck in Abhängigkeit von einem oder mehreren Bedienungsparametern des Fahrzeuges aufbauen. Geeignete Parameter können die Position der lenkbaren Räder, die Fahrzeuggeschwindigkeit oder das Maß der Lenkradbewegung sein. Beim bevorzugten Ausführungsbeispiel wird die Fahrzeuggeschwindigkeit durch geeignete elektrische nicht dargestellte Sensoren abgegriffen, um ein Signal zu schaffen, wodurch das Solenoidventil 68 den Druck in der Pilotleitung 90 verstärkt, wenn die Fahrzeuggeschwindigkeit zunimmt. Das Öffnen des Kompensatorventils 22 vergrößert die Durchflußmenge von unter Druck stehender Flüssigkeit zu dem pilotgesteuerten Ventil 20.

Das pilotgesteuerte Ventil 20 ist ein Fünf-Wege- stufenlos regelbares Steuerventil mit einem schematisch wiedergegebenen Schieberabschnitt, der zwischen einer Neutralstellung und zwei Arbeitsstellungen verstellbar ist. Das Ventil 22 wird über Federn in seiner Mittenstellung bzw. Neutralstellung 92 gehalten, in der über den Ventilschieber die Drosselleitung 70 mit dem Kanal 44 verbunden ist und somit eine Verbindung zu dem Sammelbehälter 24 besteht. Gleichzeitig ist in der Neutralstellung ein Flüssigkeitsfluß aus dem Hauptkanal 72 unterbunden, wobei gleichfalls zwei Kanäle 94 und 96 gesperrt sind, die das Ventil 20 mit den kolbenseitigen Enden der Verbraucher 14 und 16 verbinden. Zwei Kanäle 98 und 100 verbinden den Flüssigkeitsdruck in den Dosierleitungen 46 und 48 mit den sich gegenüberliegenden Seiten des Ventils 20, so daß der Ventilschieber nach rechts oder links in Abhängigkeit von der Druckdifferenz verschoben werden kann. Wenn der Ventilschieber nach links verschoben wurde, dann wird der Ventilteil 102 eine Druckflüssigkeitsverbindung von der Drosselleitung 70 und dem Hauptkanal 72 zu dem kolbenseitigen Ende des Verbrauchers 16 herstellen und das kolbenseitige Ende des Verbrauchers 14 mit dem Sammelbehälter über den Kanal 44 und den Kanal 94 verbinden. Eine Verschiebung des Ventilschiebers nach rechts in die Stellung 104 bewirkt, daß die Verbindung umgekehrt wird, so daß das kolbenseitige Ende des Verbrauchers 14 über das Ventil 20 druckbeaufschlagt und das kolbenseitige Ende des Verbrauchers 16 mit dem Sumpf verbunden ist.

Die kolbenseitigen Enden der Verbraucher 14 und 16 können zusätzlich Druckflüssigkeit von der Dosierpumpe über die Dosierkanäle 46 und 48 erhalten. Hierzu sind zwei mit Rückschlagventilen versehene Kanäle 106 und 108 zwischen dem Dosierkanal 46 und dem Kanal 96 bzw. zwischen dem Dosierkanal 48 und dem Kanal 94 vorgesehen, wobei die Rückschlagventile nur eine Flüssigkeitsverbindung von den Dosierkanälen 48 bzw. 46 in die zugehörigen Kanäle 94 und 96 zulassen.

Im nachfolgenden wird die Wirkungsweise beschrieben, und zwar im Zusammenhang mit einer Kurvenfahrt bei sich erhöhender Fahrtgeschwindigkeit. Zunächst wird davon ausgegangen, daß das Fahrzeug sich mit geringer Geschwindigkeit bewegt und daß die Kolbenstangen 52 und 54 mittig zwischen ihrer voll ausgefahrenen und voll eingefahrenen Stellung sich befinden. In dieser Position fährt das Fahrzeug geradeaus. Bei fahrendem Fahrzeug und dem Prioritätsventil 58 in der Stellung 60 liefert die Pumpe 18 Flüssigkeitsdruck zunächst durch das Prioritätsventil, wobei die Flüssigkeit in den Sammelbehälter 24 über den Kanal 42, die Drosselleitung 70 und den Kanal 44 gelangt. Der Widerstand an der Drossel 74 und gegebenenfalls an der Drossel 69 erhöht den Druck in dem Kanal 42, der von dem Pilotkanal 59 erfaßt wird, und bewirkt, daß das Prioritätsventil zwischen den Positionen 66 und 62 moduliert, so daß letztlich der Flüssigkeitsdruck zu den Hilfsfunktionen über den Kanal 64 gelangt.

Um nun eine Kurve zu durchfahren, betätigt die Bedienungsperson das Lenkrad 25 im Uhrzeigerdrehsinn. In Abhängigkeit von der Drehbewegung des Lenkrades im Uhrzeigerdrehsinn wird die Betätigungseinrichtung 36 den Ventilschieber des Dosierventils 12 in seine Arbeitsstellung 38 verbringen, so daß der von der Dosierpumpe 10 hervorgerufene Druck auf das kolbenstangenseitige Ende des Verbrauchers 14 wirkt, wodurch die Kolbenstange 52 eingefahren und die Kolbenstange 54 ausgefahren wird. In der Arbeitsstellung 38 ist das kolbenstangenseitige Ende des Verbrauchers 16 dann mit dem Sammelbehälter 24 verbunden. In der Dosierleitung 46 herrscht dann Druck, während die Dosierleitung 48 an den Sammelbehälter angeschlossen ist, so daß zwischen beiden ein Druckunterschied besteht, der, wenn er eine bestimmte Größe erreicht, den Ventilschieber des pilotgesteuerten Ventils 20 nach links in die Position 102 verschiebt, die in den Ansprüchen als erste Arbeitsstellung bezeichnet ist und in der das kolbenseitige Ende des Verbrauchers 14, das in den Ansprüchen mit der zweiten Seite des Verbrauchers bezeichnet ist, mit dem Sammelbehälter über den Kanal 94 und den Kanal 44 verbunden ist. Sobald die zweite Seite des Verbrauchers 14 drucklos wird, können beide Kolbenstangen nach links über den von der Dosierpumpe 10 hervorgerufenen Druck im Verbraucher 14 verschoben werden. Gleichzeitig wird auch noch das kolbenseitige Ende des Verbrauchers 16 mit dem Druck der Pumpe beaufschlagt, wobei in den Ansprüchen das kolbenseitige Ende als erste Seite des zweiten Verbrauchers 16 bezeichnet wird. Die Druckbeaufschlagung der ersten Seite des zweiten Verbrauchers 16 erfolgt deshalb, weil in der Arbeitsstellung 102, die in den Ansprüchen als erste Arbeitsstellung bezeichnet ist, die Drosselleitung 70 und der Hauptkanal 72 mit den Kanal 96 verbunden sind. Das Rückschlagventil in dem Kanal 106 verhindert, daß der von der Pumpe 18 herrührende Druck in die Dosierleitung 46 gelangt. Auf diese Weise ist die gesamte Kolbenstangenbewegung vollkommen durch die Dosierpumpe 10 zugemessen.

Unter der Annahme, daß sich das Solenoidventil 68 in der in der Zeichnung dargestellten, also offenen Position befindet, und da die Drosselleitung 70 über den Pilotkanal 86 an die rechte Seite des Kompensatorventils angeschlossen ist, das auf dieser Seite noch durch die Feder belastet wird, wird dieses zunächst in seine offene Position geschoben, wobei über den Druck in der Pilotleitung 88 ein Gegendruck erzeugt wird. Das Kompensatorventil 22 nimmt diese Position bereits ein, bevor das pilotgesteuerte Ventil in seine erste Arbeitsstellung 102 verschoben wird. Damit steht in dem Hauptkanal voller Druck an, und das pilotgesteuerte Ventil 20 braucht nur um einen ganz geringen Betrag nach links verschoben zu werden, um bereits eine ausreichend große Druckflüssigkeitsmenge zu der ersten Seite des zweiten Verbrauchers 16 strömen zu lassen. Da ferner bei der in der Zeichnung eingezeichneten Stellung des Solenoidventils 68 eine Verbindung zum Sammelbehälter 24 besteht, ist der Druck in der Pilotleitung 90 minimal, so daß er sich kaum auf die Stellung des Kompensatorventils 22 auswirkt. Da bei dieser Konstellation das pilotgesteuerte Ventil 20 nur um einen minimalen Betrag öffnet, ist der erforderliche Druckabfall zwischen den Dosierleitungen 46 und 48 relativ klein und kann mit einem relativ leichten Widerstand am Lenkrad 25 beibehalten werden. Dadurch braucht die Bedienungsperson nur eine geringe Kraft zum Kurvenfahren aufzubringen, solange das Fahrzeug mit geringer Geschwindigkeit fährt. Auf diese Weise beeinflußt der Druck, der von dem Kompensatorventil 22 geliefert wird, den Gewinn am pilotgesteuerten Ventil 20 und letztlich die Lenkkraft an dem Lenkrad 25.

Eine fortgesetzte Drehung des Lenkrades im Uhrzeigerdrehsinn vergrößert den Lenkeinschlag, und bei erhöter Fahrgeschwindigkeit wird das Solenoidventil 68 ansprechen und sich je nach der Fahrgeschwindigkeit mehr oder weniger schnell in Richtung auf seine geschlossene Position verstellen, wodurch der Druck in der Pilotleitung 90 erhöht wird. Wenn nun der Druck in der Pilotleitung 90 sich erhöht, wird das Kompensatorventil 22 aus seiner vollkommen offenen Stellung langsam in Richtung auf seine geschlossenen Stellung verstellt, wodurch der Flüssigkeitsdurchfluß zu dem pilotgesteuerten Ventil 20 verringert wird. Hierdurch wiederum wird der Gewinn an dem Ventil 20 bei einem gegebenen Druckabfall zwischen den Dosierleitungen 46 und 48 verringert. Daher muß das pilotgesteuerte Ventil 20, um den gleichen Wendekreis bei einer höheren Geschwindigkeit durchfahren zu können, weiter verstellt werden, damit der Durchflußquerschnitt sich vergrößert und damit die gleiche Flüssigkeitsmenge in den Kanal 96 gelangt. Eine weitere Verstellung des Ventils 20 erfordert ein größeres Moment an dem Lenkrad 25, um einen größeren Druckabfall zwischen den Leitungen 48 und 46 hervorzurufen.

Wenn nun die Fahrzeuggeschwindigkeit weiter vergrößert wird während des gleichen Wendemanövers, wird das Kompensatorventil 22 weiter in Richtung auf seine geschlossene Stellung verstellt. Irgendwann, wenn das Kompensatorventil 22 sich seiner vollkommen geschlossenen Stellung nähert, wird der Druck, der in der Dosierleitung 46 besteht, dem Druck in dem Kanal 96 entsprechen. Wenn dies passiert, wird durch den Kanal 106 eine Flüssigkeitsverbindung von der Dosierleitung 46 zu dem Kanal 96 bestehen, wodurch die erforderte Anzahl von Drehbewegungen am Lenkrad erhöht wird, um ein gegebenes Drehmanöver durchführen zu können. Das Endresultat ist ein Wechsel im Lenksystemverhältnis.

Sobald die Fahrzeuggeschwindigkeit derart angestiegen ist, daß eine Flüssigkeitsverbindung über den Kanal 106 besteht, wird ein weiteres Ansteigen der Geschwindigkeit das Drehverhältnis vergrößern. Bei einem konstanten Radeinschlag kann das Drehverhältnis weiter mit der Fahrzeuggeschwindigkeit ansteigen, bis sich das Kompensatorventil in seiner vollständig geschlossenen Position befindet. Wenn das Kompensatorventil 22 sich schließt, wird die einzige Flüssigkeitsverbindung von der Pumpe zu dem Kanal 96 über die Drosselleitung 70 erfolgen.

Um nun die Kolben bzw. Kolbenstangen der Verbraucher von einer linken in eine rechte Position zu verbringen, muß die Bedienungsperson das Lenkrad entgegen dem Uhrzeigerdrehsinn verdrehen, wodurch sich der Ventilschieber des Dosierventils 12 nach rechts in die Arbeitsposition 50 verstellt, wodurch letztlich ein Flüssigkeitsdruck an dem kolbenstangenseitigen Ende des Verbrauchers 16 entsteht, das in den Ansprüchen als zweite Seite des Zweiten Verbrauchers 16 bezeichnet ist. Analog zu der vorher beschriebenen Art und Weise wird der Flüssigkeitsdruck von der Dosierpumpe und der Anschluß des Dosierkanals 46 an den Sammelbehälter bewirken, daß sich der Ventilschieber des Ventils 20 nach rechts in seine Arbeitsposition 104 verstellt, die in den Ansprüchen als zweite Arbeitsstellung bezeichnet ist und in der die Kolbenstangen 54 und 52 nach rechts über den Flüssigkeitsdruck in dem kolbenseitigen Ende des Verbrauchers 14 verstellt werden, in ein Ausmaß, das durch die Zumessung der Flüssigkeit in den Verbraucher 16 gestattet ist. Während eines Lenkmanövers genießt das Hydrauliksystem für die Lenkung Priorität über den Sekundärfunktionen, die über den Kanal 64 mit Druckflüssigkeit beliefert werden können. Zusätzliche Einzelheiten über das Prioritätssystem und verschiedene Anordnungen von Prioritätssystemen finden sich in dem Dokument US-A-4 470 260 und den dort angegebenen Referenzen. Das Prioritätsventil 58 spricht auf den Druckabfall an der Drossel 74 an, wenn der Flüssigkeitsfluß von der Pumpe 18 zu einem der Verbraucher gelangt. Wenn sich die Kolbenstangen der Verbraucher frei in einem bescheidenen Arbeitsbereich bewegen, wird ein bescheidener Druckabfall zwischen dem Kanal 42 und dem Kanal 76 bestehen, so daß der in dem Kanal 59 herrschende Druck den Ventilschieber vorzugsweise in die Position 62 verstellt, wobei Druckflüssigkeit zu den Sekundärfunktionen gelangt. Wenn nun ein mit einer der Kolbenstangen verbundenes Rad gegen einen Widerstand stößt, so wird der Flüssigkeitsdruck stromabwärts der Drossel 74 ansteigen. In dem Kanal 80 wird dieser ansteigende Druck gemessen, wodurch wiederum der Ventilschieber des Prioritätsventils 58 in seine Position 60 zurück verstellt wird, wodurch mehr Flüssigkeitsdruck in das Lenksystem gelangt. Die Zufuhr von Flüssigkeitsdruck in das Lenksystem wird zunehmen, bis eine Stillstandsituation eintritt, d. h. eine weitere Bewegung der Kolbenstangen 52 und 54 mehr oder weniger unmöglich wird. In einer derartigen Situation herrscht ein relativ hoher Druck, und das Überdruckventil 78 wird sich öffnen. Dadurch wird eine Flüssigkeitsverbindung von der Pumpe zu dem Sammelbehälter möglich und der Druck stromabwärts der Drossel 74 verringert. Geringerer Druck stromabwärts der Drossel bewirkt, daß das Prioritätsventil 58 wieder die Sekundärfunktionen mit Druckflüssigkeit versorgt, da der Druck in dem Kanal 80 abgebaut wird. Hieraus folgt, daß eine Flüssigkeitsversorgung des Sekundärkreislaufes erhalten bleibt während der Stillstandbedingung, da das Steuersystem nicht weiter betätigt werden kann. Das Lenksystem funktioniert auch, wenn ein Druck von der Pumpe 18 nicht zur Verfügung steht. Nachfolgend wird die Wirkungsweise erläutert beim Zurückstellen der Kolbenstangen 54 und 52 von der vollen rechten Stellung in eine Mittenstellung, wobei lediglich der Druck verwendet wird, der von der Dosierpumpe 10 erzeugt wird. Die Rückkehr zur Geradeausfahrt wird wiederum dadurch eingeleitet, daß die Bedienungsperson das Lenkrad im Uhrzeigerdrehsinn verstellt, wodurch der Ventilschieber des Dosierventils 12 sich nach links in seine Arbeitsposition 38 verstellt, wodurch Druckflüssigkeit von der Dosierpumpe zu dem kolbenstangenseitigen Ende des Verbrauchers 14 gelangt. Die Druckdifferenz zwischen den Dosierkanälen 46 und 48 wiederum verstellt den Ventilschieber des Ventils 20 in die Arbeitsposition 102. In Abwesenheit eines Flüssigkeitsdruckes von der Pumpe 18 wird der Flüssigkeitsdruck von der Dosierpumpe 10 über den Kanal 106 zu dem kolbenseitigen Ende des Verbrauchers 16 gelangen. Hierdurch werden die Kolbenstangen 54 und 52 nach links über den Flüssigkeitsdruck von der Dosierpumpe geschoben, wodurch ein Wechsel in dem Verhältnis für das Steuersystem entsteht. Rückfluß des Flüssigkeitsdruckes über das Ventil 20 und durch den Hauptkanal 72 oder die Drosselleitung 70 wird durch die Rückschlagventile 82 und 71 verhindert. Das maximale Drehverhältnis wird bei dem Nicht-Vorhandensein von Flüssigkeitsdruck von der Pumpe 18 erreicht und erlaubt der Bedienungsperson, genügend Flüssigkeitsdruck zum Steuern des Fahrzeuges ohne Servo-Unterstützung zu erhalten.

**Patentansprüche**

1. Hydrauliksystem mit zwei doppelseitig beaufschlagbaren Verbrauchern (14, 16), einer in ihrer Förderrichtung umkehrbaren Dosierpumpe (10), einer an einen Sammelbehälter (24) angeschlossenen Pumpe (18), einem Dosierventil (12) und einem pilotgesteuerten Ventil (20), wobei
   - die Pumpe (18) über einen Kanal (40, 42) an das aus seiner Neutralstellung (32) in zwei Arbeitsstellungen (38, 50) verschiebbare Dosierventil (12) angeschlossen ist,
   - in der einen Arbeitsstellung (38) des Dosierventils (12) die erste Seite der Dosierpumpe (10) mit der Pumpe (18) und die zweite Seite der Dosierpumpe (10) mit der ersten Seite des ersten Verbrauchers (14) und die zweite Seite dieses Verbrauchers (14) mit dem Sammelbehälter (24) verbunden ist,
   - in der anderen Arbeitsstellung (50) des Dosierventils (12) die zweite Seite der Dosierpumpe (10) mit der Pumpe (18) und die erste Seite der Dosierpumpe (10) mit der zweiten Seite des ersten Verbrauchers (14) und die erste Seite dieses Verbrauchers (14) mit dem Sammelbehälter (24) verbunden ist,
   - die Pumpe (18) über einen Hauptkanal (72) an das aus seiner Neutralstellung (92) in zwei Arbeitsstellungen (102, 104) verschiebbare pilotgesteuerte Ventil (20) angeschlossen ist,
   - in der ersten Arbeitsstellung (102) des pilotgesteuerten Ventils (20) die Pumpe (18) mit der ersten Seite des zweiten Verbrauchers (16) verbunden ist und
   - in der zweiten Arbeitsstellung (104) des pilotgesteuerten Ventils (20) die erste Seite des zweiten Verbrauchers (16) mit dem Sammelbehälter (24) verbunden ist,
   dadurch gekennzeichnet, daß die zweite Seite des ersten Verbrauchers (14) in der ersten Arbeitsstellung (102) des pilotgesteuerten Ventils (20) mit dem Sammelbehälter (24) und in der zweiten Arbeitsstellung (104) des pilotgesteuerten Ventils (20) mit der Pumpe (18) verbunden ist, wobei in der einen Arbeitsstellung (38) des Dosierventils (12) die zweite Seite der Dosierpumpe (10) mit der ersten Seite des zweiten Verbrauchers (16) und in der anderen Arbeitsstellung (50) des Dosierventils (12) die erste Seite der Dosierpumpe (10) mit der zweiten Seite des zweiten Verbrauchers (16) verbunden ist.

2. Hydrauliksystem nach Anspruch 1, dadurch gekennzeichnet, daß der Hauptkanal (72) drosselbar ist.

3. Hydrauliksystem nach Anspruch 2, dadurch gekennzeichnet, daß der Hauptkanal (72) in Abhängigkeit von einem von einer Bedienungsperson steuerbaren Signal drosselbar ist.

4. Hydrauliksystem für eine Fahrzeuglenkung nach Anspruch 2, dadurch gekennzeichnet, daß der Hauptkanal (72) in Abhängigkeit von der Fahrgeschwindigkeit, Motordrehzahl Radstellung usw. drosselbar ist.

5. Hydrauliksystem nach einem oder mehreren der vorherigen Ansprüche, dadurch gekennzeichnet, daß im Hauptkanal (72) ein von einer offenen in eine geschlossene Stellung verbringbares Kompensatorventil (22) vorgesehen ist.

6. Hydrauliksystem nach einem oder mehreren der vorherigen Ansprüche, dadurch gekennzeichnet, daß die Pumpe (18) in den Neutralstellungen (32, 92) des Dosierventils (12) und des pilotgesteuerten Ventils (20) über eine in das pilotgesteuerte Ventil (20) mündende Drosselleitung (70) mit dem Sammelbehälter (24) verbunden ist.

7. Hydrauliksystem nach einem oder mehreren der vorherigen Ansprüche, dadurch gekennzeichnet, daß die Drosselleitung (70) in der ersten Arbeitsstellung (102) des pilotgesteuerten Ventils (20) mit der ersten Seite des zweiten Verbrauchers (16) und in der zweiten Arbeitsstellung (104) des pilotgesteuerten Ventils (20) mit der zweiten Seite des ersten Verbrauchers (14) in Verbindung steht.

8. Hydrauliksystem nach Anspruch 5, dadurch gekennzeichnet, daß stromabwärts des Kompensatorventils (22) und der Drosselleitung (70) je ein Pilotkanal (88, 86) abzweigt, die an dem Kompensatorventil (22) anliegen.

9. Hydrauliksystem nach einem oder mehreren der vorherigen Ansprüche, dadurch gekennzeichnet, daß das Kompensatorventil (22) über ein Solenoidventil (68) aus seiner offenen Stellung in seine geschlossene Stellung verstellbar ist.

10. Hydrauliksystem nach Anspruch 9, dadurch gekennzeichnet, daß die Pumpe (18) über einen das Solenoidventil (68) aufweisenden Drosselkanal mit dem Sammelbehälter (24) verbunden ist, wobei vom Drosselkanal stromaufwärts des Solenoidventils (68) ein an das Kompensatorventil (22) angeschlossener Pilotkanal (90) abzweigt und der Drosselkanal über das Solenoidventil (68) unterbrochen werden kann.

**Claims**

1. Hydraulic system with two double acting loads (14, 16), a proportioning pump (10) with reversible feed direction, a pump (18) connected to a reservoir (24), a metering valve (12) and a pilot controlled valve (20), wherein
   - the pump (18) is connected through a channel (40, 42) to the metering valve (12) movable out of its neutral position (32) into two working positions (38, 50),
   - in the one working position (38) of the metering valve (12) the first side of the proportioning pump (10) is connected to the pump (18) and the second side of the proportioning pump (10) to the first side of the first load (14) and the second side of this load (14) to the reservoir (24),
   - in the other working position (50) of the metering valve (12) the second side of the proportioning pump (10) is connected to the pump (18) and the first side of the proportioning pump (10) to the second side of the first load (14) and the first side of this load (14) to the reservoir (24),
   - the pump (18) is connected through a main channel (72) to the pilot controlled valve (20) movable from its neutral position (92) into two working position (102, 104).
   - in the first working position (102) of the pilot controlled valve (20) the pump (18) is connected to the first side of the second load (16) and
   - in the second working position (104) of the pilot controlled valve (20) the first side of the second load (16) is connected to the reservoir (24),
characterized in that the second side of the first load (14) is connected in the first working position (102) of the pilot controlled valve (20) to the reservoir (24) and in the second working position (104) of the pilot controlled valve (20) to the pump (18), wherein in the one working position (38) of the metering valve (12), the second side of the proportioning pump (10) is connected to the first side of the second load (16) and in the other working position (50) of the metering valve (12) the first side of the proportioning pump (10) is connected to the second side of the second load (16).

2. Hydraulic system according to claim 1, characterized in that the main channel (72) can be throttled.

3. Hydraulic system according to claim 2, characterized in that the main channel (72) can be throttled in dependence on a control signal controllable by an operator.

4. Hydraulic system for a vehicle steering system according to claim 2, characterized in that the main channel (72) can be throttled in dependence on the vehicle speed, engine speed, wheel position, etc.

5. Hydraulic system according to one or more of the preceding claims, characterized in that a compensating valve (22) is provided in the main channel (72), which valve can be brought from an open into a closed position.

6. Hydraulic system according to one or more of the preceding claims, characterized in that, in the neutral positions (32, 92) of the metering valve (12) and of the pilot controlled valve (20), the pump (18) is connected through a throttled line (70) opening into the pilot controlled valve (20) to the reservoir (24).

7. Hydraulic system according to one or more of the preceding claims, characterized in that the throttled line (70) is in communication with the first side of the second load (16) in the first working position (102) of the pilot controlled valve (20) and with the second side of the first load (14) in the second working position (104) of the pilot controlled valve (20).

8. Hydraulic system according to claim 5, characterized in that pilot channels (88, 86) branch off downstream of each of the compensating valve (22) and the throttled line (70), which channels are applied to the compensating valve (22).

9. Hydraulic system according to one or more of the preceding claims, characterized in that the compensating valve (22) can be set from its open position into its closed position by a solenoid valve (68).

10. Hydraulic system according to claim 9, characterized in that the pump (18) is connected to the reservoir (24) through a throttled channel containing the solenoid valve (68), wherein a pilot channel (90) connected to the compensating valve (22) branches off the throttled channel upstream of the solenoid valve (68) and the throttled channel can be interrupted by the solenoid valve (68).

**Revendications**

1. Système hydraulique comportant deux appareils d'utilisation (14,16) pouvant être chargés sur deux côtés, une pompe de dosage (10) dont le sens d'entraînement peut être inversé, une pompe (18) raccordée à un réservoir (24), une vanne de dosage (12) et une vanne à commande pilote (20), et dans lequel

  -. la pompe (18) est raccordée par l'intermédiaire d'un canal (40,42) à la vanne de dosage (12) qui peut être amenée de sa position neutre (32) dans deux positions de travail (38,50),

  - dans l'une (38) des positions de travail de la vanne de dosage (12), le premier côté de la pompe de dosage (10) est raccordé à la pompe (18) et le second côté de la pompe de dosage (10) est raccordé au premier côté du premier appareil d'utilisation (14) et le second côté de cet appareil d'utilisation (14) est raccordé au réservoir (24),

  - dans l'autre position de travail (50) de la vanne de dosage (12), le second côté de la pompe de dosage (10) est raccordé à la pompe (18) et le premier côté de la pompe de dosage (10) est raccordé au second côté du premier appareil d'utilisation (14) et le premier côté de cet appareil d'utilisation (14) est raccordé au réservoir (24),

  - la pompe (18) est raccordée par l'intermédiaire d'un canal principal (72) à la vanne à commande pilote (20) qui peut être déplacée de sa position neutre (92) dans deux positions de travail (102,104),

  - dans la première position de travail (102) de la vanne à commande pilote (20), la pompe (18) est raccordée au premier côté du second appareil d'utilisation (16) et

  - dans la seconde position de travail (104) de la vanne de commande pilote (20), le premier côté du second appareil d'utilisation (16) est raccordé au réservoir (24), caractérisé par le fait que le second côté du premier appareil d'utilisation (14) est raccordé au réservoir (24), lorsque la vanne à commande pilote (20) est dans la première position de travail (102), et à la pompe (18), lorsque la vanne à commande pilote (20) est dans la seconde position de travail (104), tandis que le second côté de la pompe de dosage (10) est raccordé au premier côté du second appareil d'utilisation (16) lorsque la vanne de dosage (12) est dans une position de travail (38), et que le premier côté de la pompe de dosage (10) est raccordé au second côté du second appareil d'utilisation (16), lorsque la vanne de dosage (12) est dans l'autre position de travail (50).

2. Système hydraulique selon la revendication 1, caractérisé en ce que le canal principal (72) peut être étranglé.

3. Système hydraulique selon la revendication 2, caractérisé en ce que le canal principal (72) peut être étranglé en fonction d'un signal pouvant être commandé par un opérateur.

4. Système hydraulique pour une direction de véhicule selon la revendication 2, caractérisé en ce que le canal principal (72) peut être étranglé en fonction de la vitesse de déplacement, de la vitesse de rotation du moteur, de la position des roues, etc.

5. Système hydraulique selon une ou plusieurs des revendications précédentes, caractérisé en ce que dans le canal principal (72) il est prévu une vanne de compensation (22) pouvant être amenée d'une position ouverte dans une position fermée.

6. Système hydraulique selon une ou plusieurs des revendications précédentes, caractérisé en ce que, lorsque la vanne de dosage (12) et la vanne à commande pilote (20) sont dans les positions neutres (32,92), la pompe (18) est raccordée au réservoir (24) par l'intermédiaire d'une canalisation d'étranglement (70) qui débouche dans la vanne à commande pilote (20).

7. Système hydraulique selon une ou plusieurs des revendications précédentes, caractérisé en ce que la canalisation d'étranglement (70) est raccordée au premier côté du second appareil d'utilisation (16), lorsque la vanne à commande pilote (20) est dans la première position de travail (102), et au second côté du premier appareil d'utilisation (14) lorsque la vanne à commande pilote (20) est située dans la seconde position de travail (104).

8. Système hydraulique selon la revendication 5, caractérisé en ce qu'en aval de la vanne de compensation (22) et de la canalisation d'étranglement (70), partent des canaux pilotes respectifs (88,86) raccordés à la vanne de compensation (22).

9. Système hydraulique selon une ou plusieurs des revendications précédentes, caractérisé en ce que la vanne de compensation (22) peut être déplacée, par l'intermédiaire d'une électrovanne (68), de sa position ouverte dans sa position fermée.

10. Système hydraulique selon la revendication 9, caractérisé en ce que la pompe (18) est raccordée au réservoir (24) par l'intermédiaire d'un canal d'étranglement contenant l'électrovanne (68), un canal pilote (90) raccordé à la vanne de compensation (22) partant du canal d'étranglement en amont de l'électrovanne (68), tandis que le canal d'étranglement peut être interrompu par l'intermédiaire de l'électrovanne (68).